# EUROPEAN PATENT APPLICATION

(11) **EP 4 645 492 A1**
(43) Date of publication of application: **05.11.2025**
(21) Application number: 23912001.7
(22) Date of filing: 22.12.2023
(51) Int. Cl.: H01M 10/052, H01M 4/13, H01M 4/66, H01M 4/505, H01M 4/525, H01M 10/0587, H01M 50/434, H01M 50/443, H01M 50/451, H01M 50/494

(54) **LITHIUM SECONDARY BATTERY**

(30) Priority: 27.12.2022 JP 2022210777
(71) Applicant: Panasonic Intellectual Property Management Co., Ltd., Kadoma-shi, Osaka 571-0057 (JP)
(72) Inventor: UCHIYAMA, Yohei, Kadoma-shi, Osaka 571-0057 (JP); TERADA, Shoshi, Kadoma-shi, Osaka 571-0057 (JP); TOGO, Masakazu, Kadoma-shi, Osaka 571-0057 (JP); KANO, Akira, Kadoma-shi, Osaka 571-0057 (JP)
(74) Representative: Novagraaf International SA
(86) International application number: PCT/JP2023/046246
(87) International publication number: WO 2024/143221

(57) **Abstract**

A lithium secondary battery includes a positive electrode, a negative electrode, a separator disposed between the positive electrode and the negative electrode, and a nonaqueous electrolyte having lithium ion conductivity. At the negative electrode, lithium metal deposits during charging, and the lithium metal dissolves during discharging. The positive electrode includes a first positive electrode active material having a compressive strength of 400 MPa or more. The thickness X (µm) of lithium metal deposited on the negative electrode during charging and the distance Y (µm) between the positive electrode and the negative electrode during discharging satisfy the relationship of 0.5X + 15 ≤ Y ≤ 4X + 20.

## Description

### [Technical Field]

The present disclosure relates to a lithium secondary battery.

### [Background Art]

Lithium secondary batteries (lithium-metal secondary batteries) are promising as high-capacity nonaqueous electrolyte secondary batteries superior to lithium-ion batteries. In a lithium secondary battery, lithium metal deposits on the negative electrode during charging, and during discharging, the lithium metal dissolves, to be released as lithium ions in the nonaqueous electrolyte (e.g., Patent Literature 1).

### [Citation List]

### [Patent Literature]

Patent Literature 1: Japanese Laid-Open Patent Publication No. 2001-243957

### [Summary of Invention]

### [Technical Problem]

At the negative electrode of the lithium secondary battery, since lithium metal deposits during charging, the degree of expansion of the negative electrode is great. The expanded negative electrode pushes the positive electrode, so that the positive electrode active material is compressed (crushed), and the electrolyte permeability in the positive electrode is reduced, which may result in deterioration in cycle characteristics. When the deposition amount of lithium metal on the negative electrode is increased in order to achieve high energy density, the pushing force of the negative electrode to the positive electrode is increased, causing the positive electrode active material to be easily compressed (crushed). It is therefore difficult to achieve both high energy density and excellent cycle characteristics.

### [Solution to Problem]

In view of the above, one aspect of the present disclosure relates to a lithium secondary battery, including: a positive electrode, a negative electrode, a separator disposed between the positive electrode and the negative electrode, and a nonaqueous electrolyte having lithium ion conductivity, wherein at the negative electrode, lithium metal deposits during charging, and the lithium metal dissolves during discharging, the positive electrode includes a first positive electrode active material having a compressive strength of 400 MPa or more, and a thickness X (µm) of lithium metal deposited on the negative electrode during charging and a distance Y (µm) between the positive electrode and the negative electrode during discharging satisfy a relationship of 0.5X + 15 ≤ Y ≤ 4X + 20.

### [Advantageous Effects of Invention]

According to the present disclosure, it is possible to obtain a lithium secondary battery having high energy density and excellent cycle characteristics.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal sectional view of a lithium secondary battery according to one embodiment of the present disclosure.
[FIG. 2] A schematic relevant-part sectional view showing the vicinity of the positive electrode of the lithium secondary battery of FIG. 1.
[FIGS. 3A and 3B] Diagrams schematically showing a cross section perpendicular to the axial direction of an example of a core member disposed in the hollow of an electrode group of a lithium secondary battery, in which FIG. 3A shows the core member in the lithium secondary battery during discharging in the initial stage, and FIG. 3B shows the core member in the lithium secondary battery during discharging after charge-discharge cycles.
[FIGS. 4A and 4B] Diagrams schematically showing a cross section perpendicular to the axial direction of another example of a core member disposed in the hollow of an electrode group of a lithium secondary battery, in which FIG. 4A shows the core member in the lithium secondary battery during discharging in the initial stage, and FIG. 4B shows the core member in the lithium secondary battery during discharging after charge-discharge cycles.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

The lithium secondary battery according to the present disclosure is sometimes referred to as a lithium metal secondary battery. At the negative electrode of this type of battery, lithium metal deposits during charging, and the lithium metal dissolves during discharging.

A lithium secondary battery according to an embodiment of the present disclosure includes an electrode group, and a nonaqueous electrolyte having lithium ion conductivity. The electrode group includes a positive electrode, a negative electrode, and a separator disposed between the positive electrode and the negative electrode. The positive electrode includes a first positive electrode active material having a compressive strength of 400 MPa or more. The thickness X (µm) of the lithium metal deposited on the negative electrode during charging and the distance Y (µm) between the positive electrode and the negative electrode during discharging (including before the first charging) satisfy a relationship of 0.5X + 15 ≤ Y ≤ 4X + 20. It is desirable that the above relationship between X and Y is satisfied in a battery in the initial stage. The battery in the initial stage herein includes a battery immediately after purchase and a battery subjected to charging and discharging once to several times after purchase.

During charging refers to when the state of charge (SOC) is 90% or more. The state of charge (SOC) being 90% or more refers to a state in which the quantity of electricity corresponding to 90% or more of the rated capacity of the battery has been charged. During discharging refers to when the depth of discharge (DOD) is 90% or more. The depth of discharge (DOD) being 90% or more refers to a state in which the quantity of electricity corresponding to 90% or more of the rated capacity of the battery has been discharged.

When during discharging, too, lithium metal is present on the negative electrode, the thickness X of the lithium metal deposited on the negative electrode during charging is the difference between the thickness of lithium metal during charging and the thickness of lithium metal during discharging. The thickness of the separator (a substrate layer) disposed between the positive and negative electrodes during discharging (or before the first charging) (when a spacer layer is disposed, the total thickness of the substrate layer and the spacer layer) may be regarded as the distance Y between the positive electrode and the negative electrode during discharging.

When the above configuration is satisfied, high energy density and excellent cycle characteristics (high capacity-retention rate) can be both achieved.

At the negative electrode of the lithium secondary battery, since lithium metal deposits during charging, the expansion rate of the negative electrode is great. On the other hand, the first positive electrode active material is unlikely to be compressed (crushed). When the positive electrode contains the first positive electrode active material, by setting Y to be (0.5X+15) or more, the compression (crushing) of the positive electrode active material and clogging of the separator which are caused by the expanded negative electrode pushing the positive electrode are suppressed, and the reduction of electrolyte permeability in the positive electrode and the clogging of the separator which are caused by the compression (crushing) of the positive electrode active material are suppressed, so that the deterioration in cycle characteristics are suppressed. Y may be (0.5X+20) or more.

When Y is (4X+20) or less, the cycle life can be prolonged. In this case, high energy density can be ensured. Y may be (4X) or less, and may be less than (4X-20).

From the viewpoint of making more unlikely to be compressed (crushed), the compressive strength of the first positive electrode active material may be 600 MPa or more, may be 750 MPa or more, and may be 1500 MPa or more.

If the positive electrode active material has a compressive force of less than 400 MPa (e.g. in the case of a second positive electrode active material as described later), such a positive electrode active material is easily compressed (crushed), as compared to the first positive electrode material, and even though Y is increased to (0.5X+15) or more, the positive electrode active material is compressed (crushed) by the expanded negative electrode pushing the positive electrode. The crushing (particle cracking) of the positive electrode active material forms new exposed surfaces, which come into contact with the nonaqueous electrolyte to facilitate side reactions, resulting in deterioration in cycle characteristics. The particle cracking includes the case where the secondary particle cracks and its aggregation is broken to be primary particles, and the case where the primary particle cracks.

### (First positive electrode active material)

The first positive electrode active material comprises, for example, non-aggregated particles (composite oxide particles). The non-aggregated composite oxide particles include particles in which the composite oxide particles are present separately one by one each as a primary particle, and particles in which several to dozens of (specifically, 2 to 19 particles) primary particles are aggregated together. The non-aggregated composite oxide particles are hardly crushed and whose surface area is unlikely to increase, and therefore, are excellent in cycle characteristics. On the other hand, depending on the balance between Y and X, the non-aggregated composite oxide particles are subjected to excessive compressive stress during expansion of the negative electrode, and the particles are crushed, which may result in deterioration in cycle characteristics. When Y is (0.5X+15) or more, the crushing of the particles is suppressed, and the deterioration in cycle characteristics is suppressed.

From the viewpoint of improving the cycle characteristics, the average particle diameter of the first positive electrode active material (non-aggregated particles) may be 1.0 µm or more, and is preferably 1.2 µm or more, more preferably 1.5 µm or more. From the viewpoint of achieving high energy density, the average particle diameter of the first positive electrode active material (non-aggregated particles) may be 5 µm or less, and may be 4 µm or less.

The average particle diameter of the first positive electrode active material (non-aggregated particles) is a median diameter (D50: particle diameter at 50% cumulative volume) in a volume-based particle size distribution measured by a laser diffraction and scattering method. The measuring instrument that can be used is, for example, "LA-750", available from Horiba, Ltd. (HORIBA).

The above average particle diameter may be determined by obtaining a cross-sectional image in the thickness direction of the positive electrode using a scanning electron microscope (SEM), to determine equivalent circle diameters of the cross sections of 20 or more composite oxide particles, and calculate an average value thereof. Here, the equivalent circle diameter refers to the diameter of a circle having the same area as that of a cross section of the composite oxide particle.

The compressive strength refers to a compressive strength per one primary particle in the case of primary particles, and in the case of secondary particles, refers to a compressive strength per one secondary particle. The compressive strength (St) is calculated based on a mathematical formula St = 2.8P / πd² (P: load applied to particles, d: particle diameter) described in "Journal of the Mining and Metallurgical Institute of Japan"; Vol. 81, No. 932, December 1965; pp 1024-1030. Here, d represents the particle diameter of the secondary or primary particles, for which the particle diameter of the secondary particles is used when calculating the compressive strength of the secondary particles, and the particle diameter of the primary particles is used when calculating the compressive strength of the primary particles. The particle diameter is a diameter of a circle having the same area as that surrounded by the contour of a particle image observed with a CCD or the like. Twenty particles are randomly selected, and the compressive strengths of the selected particles are measured using a micro compression tester, and an average value thereof is determined as the compressive strength.

From the viewpoint of improving the electrolyte permeation in the positive electrode, the mixture density of the positive electrode is preferably 3.55 g/cm³ or less. From the viewpoint of the energy density, the mixture density of the positive electrode plate is preferably 3.2 g/cm³ or more. The mixture density of the positive electrode herein refers to a density of a positive electrode mixture layer supported on a positive electrode support.

The mixture density of the positive electrode can be obtained as follows.

First, a battery in a discharged state in the initial stage is disassembled, to take out the positive electrode. Note that the battery in the initial stage includes a battery immediately after purchase and a battery subjected to charging and discharging once to several times after purchase. The battery in a discharged state is a battery with a DOD of 90% or more. The positive electrode taken out from the battery is washed with a nonaqueous solvent (e.g., 1,2-dimethoxyethane (DME)), and vacuum-dried, to remove the nonaqueous electrolyte attached to the positive electrode. The area of a principal surface and the thickness of the positive electrode mixture layer are measured, to calculate a volume V of the positive electrode mixture layer from the measured values. The thickness of the positive electrode mixture layer is determined by measuring the thicknesses at any five or more points in the length direction of the positive electrode mixture layer, to calculate an average value of them. The thickness of the positive electrode mixture layer may be determined by measuring an overall thickness of the positive electrode and a thickness of the positive electrode support using a micrometer, to calculate a difference between these thicknesses, or by using a cross-sectional image in the thickness direction of the positive electrode obtained with a scanning electron microscope (SEM). Thereafter, the positive electrode mixture layer is removed from the positive electrode, to measure a mass M of the positive electrode mixture layer. The obtained volume V and mass M are used to determine a mixture density.

The positive electrode includes, as a positive electrode active material, at least a first positive electrode active material, and the positive electrode active material may include a small amount of another positive electrode active material not corresponding to the first positive electrode active material. The ratio of the first positive electrode active material in the whole positive electrode active material in the positive electrode, for example, may be 50 mass% or more, and may be 90 mass% or more.

The other positive electrode active material may include a second positive electrode active material having a compressive strength of 250 MPa or less. The second positive electrode active material, as compared to the first positive electrode active material, is easily compressed (crushed) during the rolling process in the positive electrode production, leading to increased contact area with the nonaqueous electrolyte, and decreased voids within the positive electrode mixture layer, which are advantageous in terms of achieving high energy density. The material (composition) may be the same or different between the first positive electrode active material and the second positive electrode active material. The compressive strength of the second positive electrode active material may be 200 MPa or less.

The second positive electrode active material comprises, for example, aggregated particles (composite oxide particles). The aggregated composite oxide particles refers to particles in which dozens of primary particles (specifically, 20 or more or 50 or more particles) are aggregated together, forming a secondary particle. For example, the aggregated composite oxide particles can be each composed of 1,000 to 5,000,000 primary particles.

The average particle diameter of the second positive electrode active material (aggregated particles) may be, for example, 1 µm to 20 µm. The average particle diameter of the second positive electrode active material is a median diameter (D50: particle diameter at 50% cumulative volume) in a volume-based particle size distribution measured by a laser diffraction and scattering method. The average particle diameter of the second positive electrode active material (aggregated particles) may be determined by the aforementioned method using a SEM image of the positive electrode cross section.

The lithium secondary battery may include a stacked electrode group formed by stacking a positive electrode, a negative electrode, and a separator, and may include a wound electrode group formed by winding a positive electrode and a negative electrode, with a separator between the positive and negative electrodes. The wound electrode group has a tubular shape with a hollow.

A core member may be disposed in the hollow of the wound electrode group. The material of the core member may be, although not particularly limited to, a metal, and in particular, is desirably stainless steel in terms of its strength and durability.

The core member disposed in the hollow of the electrode group pushes the electrode group from the inner circumferential side, which stabilizes the shape of the electrode group and makes it easy to apply a surface pressure more stably to the entire electrode group. This can easily suppress the dendrite formation and growth of lithium metal on the negative electrode. Note that the surface pressure of the electrode group herein refers to a pressure applied in the radial direction of the electrode group, due to the pushing of the core member against the inner circumferential surface of the electrode group. The outer circumferential surface of the electrode group is usually pushed by a battery can housing the electrode group and the like.

The outer shape of the electrode group is, for example, cylindrical, and the outer shape of a cross section of the electrode group may be, for example, circular or elliptical. The shape of the core member may be selected according to the shape of the electrode group (hollow). When the outer shape of a cross section of the electrode group is circular, the outer shape of a cross section of the core member to be inserted into the hollow of the electrode group may be circular. The "cross section of the electrode group" refers to a cross section perpendicular to the winding axis of the electrode group. The "cross section of the core member" refers to a cross section perpendicular to the axis of the core member, and when the core member is inserted into the hollow of the electrode group, it refers to a cross section perpendicular to the winding axis of the electrode group.

The shape of the core member is preferably a hollow tubular shape. The nonaqueous electrolyte is housed in the hollow of the core member, suppressing the occurrence of electrolyte depletion of the electrode group. The electrolyte depletion of the electrode group is a phenomenon in which the electrode group is strongly pushed from its inner circumferential side by the core member, and the nonaqueous electrolyte is pushed out of the electrode group, causing the nonaqueous electrolyte in the electrode group to be depleted.

The core member has a hollow tubular shape, and has a slit extending in the axial direction, and both end portions in the circumferential direction that regulate the slit are preferably misaligned without abutting each other. Since both end portions in the circumferential direction that regulate the slit are misaligned without abutting each other, in the event when the surface pressure of the electrode group increases, the both end portions are displaced in the circumferential direction, so that the core member can shrink in the radial direction. By the shrinking of the core member in the radial direction, the increase in the surface pressure of the electrode group during expansion of the negative electrode is suppressed, the increase in the compressive stress applied to the positive electrode is suppressed, the compression (crushing) of the first positive electrode active material is easily suppressed, and the deterioration in cycle characteristics is easily suppressed.

The outer diameter of the core member may be set such that a gap is present before the first charging between the inner circumferential surface of the electrode group and the outer circumferential surface of the core member, and the inner circumferential surface of the electrode group comes in contact with the outer circumferential surface of the core member in the lithium secondary battery in a discharged state after the first charging and discharging.

The shape of the core member may be selected according to the shape of the hollow of the electrode group. The outer diameter of the core member may be, for example, a size that allows the inner circumferential surface of the electrode group to come in contact with the outer circumferential surface of the core member in the lithium secondary battery in a discharged state after the first charging and discharging. In this case, all the time through during charging and discharging, a moderate pressure is applied from the core member to the electrode group from the inner circumferential side, so that the surface pressure is more stably applied to the entire electrode group.

The battery may include an outer can that houses the electrode group, the core member, and the nonaqueous electrolyte. The outer can is a metal case, which is sometimes called a battery can. The material of the outer can is required to have excellent strength and durability. The material of the outer can may be, although not particularly limited to, a metal, and in particular, is desirably stainless steel in terms of its strength and durability. The shape of the outer can is, for example, a tubular shape (cylindrical tubular shape, flat tubular shape, prismatic tubular shape, etc.) with a bottom. A sealing body is disposed at the opening of the outer can, sealing the battery.

The inner circumferential surface of the outer can faces the outer circumferential surface of the electrode group. The presence of the outer can further stabilize the shape of the electrode group, and the buckling of the electrodes (esp., on the outer circumferential side of the electrode group) is easily suppressed. The inner diameter of the outer can may be set such that the outer circumferential surface of the electrode group comes in contact with the inner circumferential surface of the outer can in the lithium secondary battery in a discharged state after the first charging and discharging.

In the following, each constituent element of the lithium secondary battery will be specifically described.

### [Negative electrode]

In the lithium secondary battery, lithium metal deposits on the surface of the negative electrode during charging. Specifically, through charging, lithium ions contained in the nonaqueous electrolyte receive electrons on the negative electrode to become lithium metal, which deposits on the surface of the negative electrode. The lithium metal deposited on the surface of the negative electrode dissolves as lithium ions into the nonaqueous electrolyte through discharging. The lithium ions contained in the nonaqueous electrolyte may be either derived from a lithium salt added to the nonaqueous electrolyte or supplied from the positive electrode active material through charging, or both.

In the lithium secondary battery, for example, 70% or more of the rated capacity develops through deposition and dissolution of lithium metal. The migration of electrons at the negative electrode during charging and during discharging is mainly due to the deposition and the dissolution of lithium metal at the negative electrode. Specifically, 70 to 100% (e.g., 80 to 100%, 90 to 100%) of the migration of electrons (in another aspect, electric current) at the negative electrode during charging and during discharging is due to the deposition and the dissolution of lithium metal. That is, the negative electrode of the lithium secondary battery according to the present disclosure differs from a negative electrode in which the migration of electrons at the negative electrode during charging and during discharging is mainly due to absorption and release of lithium ions into and from the negative electrode active material (graphite etc.).

In a battery in which lithium metal deposits on the negative electrode during charging, the open circuit potential (OCV: open circuit voltage) of the negative electrode at full charge (e.g., SOC 98% or more) is, for example, 70 mV or less, relative to lithium metal (dissolution/deposition potential of lithium). The OCV of the negative electrode at full charge can be measured by disassembling the battery in a fully charged state under an argon atmosphere to take out the negative electrode, and assembling it into a cell for measurement, with lithium metal used as a counter electrode. The nonaqueous electrolyte of the cell may be of the same composition as the electrolyte in the disassembled battery.

### (Negative electrode support)

The negative electrode includes a negative electrode support that supports the lithium metal deposited during charging. The negative electrode support has a current collecting function. The thickness of the negative electrode support is not particularly limited, and is, for example, 5 µm or more and 300 µm or less.

A lithium metal layer or a lithium alloy layer (hereinafter sometimes referred to as a lithium foundation layer) may be provided in advance by adhering a sheet-like (or foil-like) lithium metal or lithium alloy onto a surface of the negative electrode support. The lithium alloy can contain, in addition to lithium, an element, such as aluminum, magnesium, indium, and zinc. By allowing lithium metal to deposit during charging on the lithium foundation layer provided in advance, the dendritic deposition can be further effectively suppressed. The thickness of the lithium foundation layer may be, although not particularly limited to, in the range of 5 µm to 25 µm, for example.

The negative electrode support may be, for example, a foil- or film-like metal material. The metal foil used for the negative electrode support may be a copper foil (electrolytic copper foil). The metal material may be, for example, Cu, Ni, Fe, or alloys containing these metal elements. Examples of the alloy include Cu alloy and Fe alloy (stainless steel, etc.).

In particular, the negative electrode support preferably includes a stainless steel foil and an oxygen-free copper foil. The stainless steel foil is more preferably an austenitic stainless steel foil. In the case of an austenitic stainless steel foil, the embrittlement of the negative electrode support is suppressed, and the negative electrode support has moderate strength and flexibility, and is excellent in resistance to the stress generated in the negative electrode. Even when a copper foil containing a small amount of oxygen is used, the embrittlement of the negative electrode support is suppressed. The thickness of the negative electrode support is not particularly limited, and is, for example, 5 µm or more and 300 µm or less.

The austenitic stainless steel is a stainless steel having an austenite percentage of 50% or more. The austenite percentage may be 70% or more, may be 90% or more, and may be 100%.

The austenite percentage means a proportion (mass ratio) of the austenite phase in the stainless steel. When the contents of the austenite phase, the ferrite phase, and the martensite phase in the stainless steel are represented by x, y, and z, respectively, the austenite percentage is calculated as {x / (x + y + z)} × 100. The austenite constitution has a face-centered cubic lattice structure (FCC structure), and the ferrite constitution and the martensitic constitution have a body-centered cubic lattice structure (BCC structure).

The austenitic stainless steel may contain, as a component other than Fe, for example, C, Si, Mn, P, S, Ni, Cr, Mn, Mo, Cu, N, or the like. The above stainless steel may be a low carbon type, an ultra-low carbon type, or a nitrogen-added type stainless steel, and may be a duplex stainless steel containing austenite.

Examples of the austenitic stainless steel include SUS301, SUS302, SUS303, SUS304, SUS305, SUS309, SUS310, SUS312, SUS315, SUS316L, SUS317, SUS321, and SUS347. In particular, SUS304 and SUS316L are preferred. The austenitic stainless steel is not limited to those exemplified above, and may be a stainless steel with an austenite percentage of 50% or more prepared in any way by a melting method. The austenitic stainless steel foil may be a foil softened by annealing.

The austenite percentage can be determined by the following method.

A sample (e.g., size: 25 mm square) of a stainless steel foil is prepared, and X-ray diffraction (XRD) measurement employing a two-dimensional detection function is performed on the sample, to obtain an XRD pattern (vertical axis: X-ray diffraction intensity, horizontal axis: diffraction angle 20). The size of the measurement area (microscopic region) is 15 mm square, for example.

Desirable XRD measurement conditions are shown below.

### <Analysis apparatus>

Two-dimensional microscopic-region X-ray diffractometer (RINT-RAPID II, available from Rigaku Co., Ltd.)

### <Analysis conditions>

Tube: Co
Monochromatization: a monochromator is used (CoKα)
Tube output: 40 kV - 30 mA
Detector: Imaging plate (2D)

### (Reflection method)

Collimator: Φ300 µm
ω angle: 25° to 35° (2°/sec)
ϕ angle: 360° rotation (1°/sec)
Measurement time (exposure): 30 minutes

The obtained XRD pattern is fitted by the least squares method utilizing a standard database, and next, quantitative analysis is performed by Rietveld analysis. The XRD pattern can have a diffraction peak corresponding to at least one of the austenite phase, the ferrite phase, and the martensitic phase. The analysis can be performed using a software accessory to the analysis apparatus. Through this analysis, the proportion (mass ratio) of the austenite phase to the total of the austenite phase, the ferrite phase, and the martensite phase is determined, as the austenite percentage. Several measurement areas are randomly selected in the sample, the austenite percentage in each measurement area is determined, to calculate an average value thereof.

The austenite percentage can be estimated using a Schaeffler's diagram showing the relationship between ferrite-stabilizing and austenite-stabilizing elements, and the constitution. The constitution diagram shows the constitution ratio, with ferrite-stabilizing elements and austenite-stabilizing elements taken on both axes. The vertical axis of the constitution diagram shows a Ni equivalent, and the horizontal axis shows a Cr equivalent. The Cr equivalent is a value obtained by converting the degree of the ferrite stabilizing elements into the amount of chromium, and can be expressed by an equation: Cr equivalent = %Cr + %Mo + 1.5 × %Si + 0.5 × %Nb. The Ni equivalent is a value obtained by converting the degree of the austenite stabilizing elements into the amount of nickel, and can be expressed by an equation: Ni equivalent = %Ni + 30 × %C + 0.5 × %Mn.

In accordance with JIS G 0321, the component analysis of the stainless steel can be performed, and quantitative analysis can be performed for the austenite-stabilizing element (Ni, Mn, C, etc.) and the ferrite-stabilizing element (Cr, Mo, Si, Nb).

The oxygen-free copper foil is a copper foil with an oxygen content of 50 ppm or less. The oxygen content may be 30 ppm or less, and may be 15 ppm or less. The oxygen content means an oxygen content in a base material excluding the oxide film covering the surface of the copper foil.

The oxygen-free copper foil may contain a small amount of component other than copper (e.g., Ni, Cr, Fe, Zn, Sn, Ag, Pb, Bi, Cd, Hg, O, P, S, Se, Te, H, etc.). The Cu content in the copper foil may be 99.9 mass% or more, and may be 99.96 mass% or more. The copper foil may be a rolled copper foil. The oxygen-free copper may be, for example, of alloy number C1020 specified in JIS H 3100.

The oxygen content in the copper foil can be determined by the following method.

A sample of copper foil is washed with nitric acid (1+1) for 10 seconds, to remove the oxide film on the sample surface. The above washing is repeated until the sample is reduced by 10 mass% or more. Next, the sample is washed with distilled water, alcohol, and acetone in this order. Next, the sample is dried with hot air, and immediately thereafter, an analysis by inert gas fusion-infrared absorption method is performed, to determine an oxygen content in the sample. The analysis apparatus that can be used is an oxygen-nitrogen simultaneous analyzer (TC-336, available from LECO Corporation).

The negative electrode support preferably includes a resin film. The resin film has favorable flexibility and can alleviate the stress generated in the negative electrode along with charging (deposition of lithium metal at the negative electrode). In addition, the stress generated in the negative electrode along with winding can also be alleviated. Therefore, the rupture of the negative electrode and the like can be suppressed. In addition, the resin film is lightweight, and is likely to increase the energy density of the secondary battery. Furthermore, the resin film is hardly cut during roll conveying and is easy to handle.

The resin film is a film mainly composed of a resin or an organic material, and 51 mass% or more of the resin film is composed of a resin or an organic material. The resin film may contain an inorganic material like inorganic particles. The resin film may have, on at least one surface, a thin film containing an inorganic material. The resin film may be a stretched film, may be a nonporous film (film without pores), and may be a film having orderly arranged pores. The resin film may be provided with pores by colliding particles, such as sand, therewith. The resin film may have insulating properties, may have electrical conductivity, and may be electrically non-conductive. The form and physical properties of the resin film are not particularly limited.

Examples of the resin contained in the resin film include, but not particularly limited to, a polyester resin, an olefin resin, a polyphenylene sulfide resin, an acrylic resin, a polycarbonate resin, a polyether ether ketone resin, a polyether sulfone resin, a polyamide resin, a polyimide resin, a nylon resin, a polyvinylidene chloride resin, an ethylene-vinyl alcohol copolymer, a polyvinyl alcohol resin, a polystyrene resin, a urethane resin, and an epoxy resin. The resin contained in the resin film may be used singly or in combination of two or more kinds. The resin contained in the resin film may be a resin having an aromatic ring, and may be a resin containing no fluorine atom or an olefin resin. When the resin has an aromatic ring (e.g., a benzene ring) in its molecule, the affinity between the resin film and the lithium metal layer is enhanced, leading to improved bonding between the two.

As the polyester resin, an aromatic polyester is preferred, which is preferably polyethylene terephthalate, polybutylene terephthalate, polyethylene naphthalate, and the like. The film including polyethylene terephthalate or the like may be an unstretched film or a biaxially stretched film. As the acrylic resin, polymethyl methacrylate and the like are exemplified. As the polyimide resin, an aromatic polyimide is preferred. As the polyamide resin, an aromatic polyamide (aramid resin) is preferred.

As the olefin resin, polypropylene, polyethylene, and the like are preferred. Polypropylene includes an unstretched polypropylene, a biaxially stretched polypropylene, and the like. Polyethylene includes a low-density polyethylene, a medium-density polyethylene, a high-density polyethylene, a linear low-density polyethylene, metallocene polyethylene, and the like. Examples of the olefin resin include, in addition to the above, an ethylene-vinyl acetate copolymer, an ethylene-methyl acrylate copolymer, an ethylene-ethyl acrylate copolymer, an ethylene-methyl methacrylate copolymer, an ethylene-acrylic acid copolymer, an ethylene-methacrylic acid copolymer, and an ionomer resin (i.e., one that contains at least one of an ethylene-acrylic acid copolymer and an ethylene-methacrylic acid copolymer).

The production method of a resin film is, for example, an extrusion molding, examples of which include a T-die method and an inflation method. The film may be an unstretched film or a stretched film. The stretched film may be a uniaxially stretched film and may be a sequentially (or simultaneously) biaxially stretched film. The number of monomers constituting the resin (polymer) is not particularly limited. The polymer may be a homopolymer, may be a copolymer, and may be a terpolymer. Without particular limitation on the arrangement of monomers, the polymer may be a random copolymer or a block copolymer. The resin film may be constituted of two or more kinds of resin films stacked together. The resin may be in a crystal state, may be in an amorphous state obtained through a rapid cooling method or the like, and may be in a mixed state of the two. In order to improve the adhesion, a surface of the resin film may be subjected to corona treatment or plasma treatment.

From the viewpoint of increasing the energy density of the lithium secondary battery, the thickness of the resin film is preferably as thin as possible as long as its mechanical strength is ensured. The thickness of the resin film may be, for example, 5 µm or more and 80 µm or less, and may be 5 µm or more and 30 µm or less.

The resin film is usually an electrically insulating material and has no current-collecting function. For ensuring the current collecting function of the electrode, a surface of the resin film may be covered with a foundation metal layer. Hereinafter, a resin film having a surface covered with a foundation metal layer is sometimes referred to as a "resin film with a foundation metal layer". It suffices when the foundation metal layer may cover, for example, a region supporting the active material layer (e.g., at least 90% of the region) and a region to which an electrode lead is attached, on the surface of the resin film.

In the case of a negative electrode, the foundation metal layer preferably contains, for example, copper, nickel, chromium, stainless steel, titanium, silver, gold, tin, or the like. In this case, the foundation metal layer is likely to be ensured to have corrosion resistance, electrical conductivity, and the like, and is unlikely to form an alloy with lithium.

From the viewpoint of improving the energy density of the battery, the thickness of the foundation metal layer, for example, may be 2 µm or less, and may be 1 µm or less. From the viewpoint of ensuring the current-collecting ability and the adhesion, the thickness of the foundation metal layer may be, for example, 0.001 µm or more.

In the case of a negative electrode of a lithium secondary battery, the lithium metal layer may bear the current collecting function. That is, the lithium metal layer may be disposed on the resin film, to form a negative electrode. In this case, a foundation metal layer may be provided on the surface of the resin film at a portion to which a negative electrode lead is connected.

The lithium metal layer may be adhered to the resin film with a foundation metal layer. With a foundation metal layer, the decrease in current collecting function can be suppressed even when the lithium metal layer is locally decreased during charge-discharge cycles, or the lithium metal changes into a lithium compound, causing the lithium metal to be isolated like islands.

The foundation metal layer can be formed by, for example, a vapor deposition method, such as vapor deposition and sputtering, an electroless plating method, an electrolytic plating method, a lamination method, and the like, without particular limitation on the forming method.

### (Others)

The negative electrode may include a lithium ion storage layer (a layer that develops capacity through absorption and release of lithium ions into and from the negative electrode active material (graphite etc.)) supported on the negative electrode support. In this case, the open circuit potential of the negative electrode at full charge may be 70 mV or less relative to lithium metal (dissolution-deposition potential of lithium). When the open circuit potential of the negative electrode at full charge is 70 mV or less relative to lithium metal, the lithium ion storage layer at full charge has lithium metal on its surface. That is, the negative electrode develops capacity through deposition and dissolution of lithium metal.

The lithium ion storage layer is a layer of a negative electrode mixture containing a negative electrode active material. The negative electrode mixture may contain, in addition to the negative electrode active material, a binder, a thickener, a conductive agent, and the like.

Examples of the negative electrode active material include a carbonaceous material, a Si-containing material, and a Sn-containing material. The negative electrode may contain the negative electrode active material singly or in combination of two or more kinds. As the carbonaceous material, for example, graphite, graphitizable carbon (soft carbon), non-graphitizable carbon (hard carbon), and the like can be used.

The conductive material is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubbery polymer. Examples of the fluorocarbon resin include polytetrafluoroethylene and polyvinylidene fluoride.

### [Positive electrode]

The positive electrode includes a positive electrode support that supports a positive electrode active material. The thickness of the positive electrode support is not particularly limited, and is, for example, 5 µm or more and 300 µm or less. The positive electrode active material includes at least a first positive electrode active material. As the positive electrode support, for example, a foil-shaped or sheet-shaped metal material can be used. The metal material may be Al, Al alloy, Ti, Ti alloy, or Fe alloy (stainless steel (SUS), etc.).

From the viewpoint of suppressing the rupture of the positive electrode during charging and discharging, the positive electrode support preferably contains a resin film. For the resin film, those exemplified for the negative electrode support can be used. The resin film with a foundation metal layer exemplified for the negative electrode support may be used for the positive electrode support. In the case of a positive electrode, the foundation metal layer preferably contains, for example, aluminum, stainless steel, or the like.

The positive electrode may include a positive electrode mixture layer containing a positive electrode active material, and a positive electrode support that supports the positive electrode mixture layer. The positive electrode mixture layer contains, for example, a positive electrode active material, a conductive material, and a binder. The positive electrode mixture layer may be formed on only one surface or on both surfaces of the positive electrode support. The positive electrode can be obtained by, for example, applying a positive electrode mixture slurry containing a positive electrode active material, a conductive material, and a binder, onto both surfaces of the positive electrode support, and drying the applied films, followed by rolling. As the positive electrode active material, the conductive material, the binder, and others, for example, known materials can be used.

As the positive electrode active material, a lithium-containing composite oxide having a layered rock-salt type crystal structure containing lithium and a transition metal can be used. Specifically, the lithium-containing composite oxide may be, for example, LiₐNi_{1-x-y}CoₓM_{y}O₂, where 0 < a ≤ 1.2, 0 ≤ x ≤ 0.1, 0 ≤ y ≤ 0.1, 0 < x+y ≤ 0.2, and M is at least one selected from the group consisting of Na, Mg, Sc, Y, Mn, Fe, Cu, Zn, Al, Cr, Pb, Sb, and B. From the viewpoint of the stability of the crystal structure, Al may be contained as the M. Mn may be contained as the M. The value "a" indicating the molar ratio of lithium increases or decreases during charging and discharging. Specific examples of such a composite oxide include a lithium-nickel-cobalt-aluminum composite oxide (LiNi_{0.9}Co_{0.05}Al_{0.05}O₂, LiNi_{0.91}Co_{0.06}Al_{0.03}O₂, etc.).

The molar ratio mLi/mMe of a total amount mLi of Li that the positive and negative electrodes have, to an amount mMe of metal Me that the lithium-containing composite oxide has is, for example, 1.2 or less, and may be 1.1 or less.

In the following, a method for producing a lithium-containing composite oxide will be described, with a lithium-nickel-cobalt-aluminum (or manganese) composite oxide used as an example.

The method for producing a lithium-containing composite oxide includes, for example: a composite hydroxide synthesis step of obtaining a Ni-Co-Al composite hydroxide or a Ni-Co-Mn composite hydroxide, or the like; a raw material mixing step of mixing the composite hydroxide with a lithium compound, to obtain a raw material mixture; and a firing step of firing the raw material mixture, to obtain composite oxide particles.

In the composite hydroxide synthesis step, for example, using a co-precipitation method, an alkaline solution, such as sodium hydroxide, is added dropwise to a solution of a metal salt containing Ni, Co, Al (or Mn), etc. under stirring, until the pH is adjusted to the alkaline side (e.g., 8.5 to 11.5), thereby to allow a Ni-Co-Al composite hydroxide or a Ni-Co-Mn composite hydroxide to be deposited (co-precipitated). The composite hydroxide synthesis step may include an aging step of, after the deposition of a composite hydroxide, leaving the composite hydroxide to stand as it is in the reaction solution. This makes it easy for finally obtained composite oxide particles to be obtained as non-aggregated particles.

In the raw material mixing step, for example, the above composite hydroxide is mixed with a lithium compound, such as lithium hydroxide, lithium carbonate, or lithium nitrate, to obtain a raw material mixture. By adjusting the mixing ratio between the composite hydroxide and the lithium compound, it is possible to control the compressive strength of the finally obtained composite oxide particles, and also, it is possible to prepare non-aggregated particles. In order to form composite oxide particles in the form of non-aggregated particles and to set the compressive strength to 400 MPa or more, the mixing ratio between the composite hydroxide and the lithium compound may be such that metal elements (Ni + Co + Al or Mn) : Li falls in the range of 1.0 : 1.02 to 1.0 : 1.2 by molar ratio.

In the firing step, for example, the raw material mixture is fired in an oxygen atmosphere, to obtain composite oxide particles. By adjusting the firing temperature of the raw material mixture, too, it is possible to control the compressive strength of the finally obtained composite oxide particles, and also, it is possible to prepare non-aggregated particles. In order to form composite oxide particles in the form of non-aggregated particles and to set the compressive force to 400 MPa or more, the firing temperature of the raw material mixture may be set, for example, in the range of 750 °C or more and 1100 °C or less. The firing time is preferably 20 hours to 150 hours, and more preferably 20 hours to 100 hours. When the firing time of the composite oxide particles exceeds 150 hours, as compared to when 150 hours or less, it may occur, for example, that the material physical properties and the electrochemical characteristics deteriorate.

### [Separator]

For the substrate layer constituting the separator, a porous sheet having ion permeability and electrically insulating properties is used. Examples of the porous sheet include a microporous thin film, a woven fabric, and a nonwoven fabric.

From the viewpoint of the compressive strength in the thickness direction, the porous sheet is preferably a microporous film. The separator may be produced by a uniaxial stretching method in which stretching is performed only in the X direction (MD direction), or a biaxial stretching method in which stretching is performed in the X direction and the Y direction. From the viewpoint of improving the compressive strength in the thickness direction (Z direction), preferred is a uniaxial stretching method. In the substrate layer of the separator having a long-length shape or a belt-like shape, usually, the length direction is the MD direction, and the width direction is a TD direction perpendicular to the MD direction. In forming an electrode group, the substrate layer of the separator is usually wound in the MD direction. From the similar viewpoint, the ratio of (the tensile strength in the MD direction / the tensile strength in the TD direction), i.e., the ratio of (the tensile strength in the length direction / the tensile strength in the width direction), is preferably 4.5 or more. As a result of intensive studies on the separator, the inventors have newly found that the separator produced by a uniaxial stretching in which stretching is performed only in the X direction (MD direction) and having a ratio of (the tensile strength in the length direction / the tensile strength in the width direction) of 4.5 or more has improved strength against compression in the thickness direction (Z direction), as compared to the separator produced by a biaxial stretching method in which stretching is performed in both the X and Y directions. Such a separator has excellent resistance to swelling of the negative electrode, and can contribute to improving the cycle characteristics.

The tensile strength can be determined by performing a tensile test in accordance with JIS K 7127. Specifically, the separator taken out from the disassembled battery is washed with a nonaqueous solvent (e.g., 1,2-dimethoxyethane (DME)) and water, and vacuum-dried. Attached substances derived from the electrode material and attached to the surface of the separator can be removed by washing. If it is difficult to remove the attached substances, washing may not be performed. Next, a dumbbell specimen is taken from the separator along the length direction, to perform a tensile test at a test speed of 20 mm/min. For calculation of the tensile strength, the maximum load value and the specimen cross-sectional area are used. The number of observations (N number) is 7, and the average value of the remaining five measured values excluding the maximum and minimum values is calculated as a tensile strength in the length direction (MD direction). The tensile strength in the width direction (TD direction) is also calculated by taking a dumbbell specimen from the separator in the width direction and using the same procedure as above. When the separator is small, instead of the specified dumbbell specimen, a strip-shaped specimen of a predetermined size may be used as appropriate.

The material of the porous sheet is not particularly limited, and may be a polymer material. Examples of the polymer material include an olefin resin, a polyamide resin, and cellulose. Examples of the olefin resin include polyethylene, polypropylene, and a copolymer of ethylene and propylene. The substrate layer may contain an additive, as necessary. Examples of the additive include an inorganic filler. The porous sheet may be constituted of a single layer or two or more layers, and may be, for example, a triple layer structure in which the first layer is polypropylene, the second layer is polyethylene, and the third layer is polypropylene.

The thickness of the substrate layer is, although not particularly limited to, for example, 15 µm or more and 150 µm or less, and in the case of a lithium metal battery, more preferably, 30 µm or more and 70 µm or less, although depending on the amount of deposited lithium.

The substrate layer may include a porous sheet, and a composite material layer containing inorganic particles which is disposed on the surface of the porous sheet. The presence of the composite material layer improves the durability of the separator against swelling of the negative electrode. The composite material layer may be formed on one principal surface or both principal surfaces of the porous sheet. The composite material layer is a layer that allows lithium ions to pass through. The thickness of the composite material layer may be 5% to 50% of the overall thickness of the separator.

The composite material layer includes a resin material (binder) and inorganic particles. The inorganic particles include particles of an oxide, a hydroxide, a nitride, a carbide, a sulfide, and the like. Examples of the oxide include aluminum oxide, boehmite, magnesium oxide, titanium oxide, zirconium oxide, silicon oxide, yttrium oxide, and zinc oxide. Examples of the nitride include silicon nitride, aluminum nitride, boron nitride, and titanium nitride. Examples of the carbide include silicon carbide and boron carbide. Examples of the sulfide include barium sulfate. Examples of the hydroxides include aluminum hydroxide.

For the resin material (binder), a polymer material having higher heat resistance than the material of the porous sheet is desirably used. Such a polymer material preferably includes at least one selected from the group consisting of an aromatic polyamide, an aromatic polyimide, and an aromatic polyamide imide. These are known as polymer materials with high heat resistance. From the viewpoint of the heat resistance, preferred are an aramid, i.e., a meta-aramid (meta-type wholly-aromatic polyamide) and a para-aramid (para-type wholly-aromatic polyamide), acrylic, and polyvinylidene fluoride.

The content ratio of the inorganic particles in the composite material layer may be in the range of 50 mass% to 99 mass% (e.g., in the range of 85 mass% to 99 mass%).

### [Spacer layer]

A spacer layer (protrusions) may be provided between at least one of the positive and negative electrodes and the separator (substrate layer). The spacer may provide a space between at least one of the positive and negative electrodes and the separator (substrate layer). The expanded negative electrode will be accommodated in the space formed by the spacer layer. By providing the spacer, the expansion of the electrode group is suppressed, and the compressive stress generated in the positive electrode is alleviated, leading to improved cycle characteristics. The spacer layer may be provided on a principal surface facing the negative electrode of the substrate layer, may be provided on a principal surface facing the positive electrode of the substrate layer, and may be provided on both principal surfaces. The protrusions constituting the spacer layer, for example, may be provided, on a principal surface of the substrate layer, in a pattern of a plurality of lines along the longitudinal direction of the substrate layer, may be provided in a honeycomb pattern, and may be distributed like dots.

The spacer layer may be formed by, for example, applying a dispersion liquid containing a spacer material onto a surface of the substrate layer, followed by drying. The dispersion liquid containing a spacer material contains, for example, electrically insulating particles, a binder resin, and a thickener. Thus, the spacer layer formed from the dispersion liquid contains insulating particles, a binder resin, and a thickener. The dispersion medium of the dispersion liquid may be, although not particularly limited to, for example, water, an organic solvent, or a mixture of water and an organic solvent. As the organic solvent, for example, N-methyl-2-pyrrolidone (NMP) can be used. In particular, it is desirable to use water in terms of reducing the environmental load.

The insulating particles may be inorganic particles, such as those of a metal oxide, a metal hydroxide, a metal nitride, a metal carbide, and a metal sulfide. Examples of the metal oxide include aluminum oxide (alumina, boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Minerals, such as aluminosilicate, layered silicate, barium titanate, and strontium titanate, may also be used. In particular, preferred are alumina, silica, titania, and the like. The median diameter (i.e., average particle diameter) in a volume-based particle size distribution of the insulating particles is, for example, 1.0 µm to 10 µm.

The binder resin may be, for example, a fluorocarbon resin, a fluorocarbon rubber, a styrene-butadiene copolymer or a hydrogenated product thereof, an acrylonitrile-butadiene copolymer or a hydrogenated product thereof, a methacrylic acid ester-acrylic acid ester copolymer, a styrene-acrylic acid ester copolymer, an acrylonitrile-acrylic acid ester copolymer, an ethylene propylene rubber, a polyphenylene ether, a polysulfone, a polyethersulfone, a polyphenylene sulfide, a polyether imide, a polyimide, a polyamide such as a wholly-aromatic polyamide (aramid), a polyimide, a polyamide imide, a polyacrylonitrile, a polyether, a polyolefin, and the like.

The amount of the binder resin, for example, may be 20 to 80 parts by volume, may be 20 to 70 parts by volume, may be 20 to 50 parts by volume, and may be 25 to 40 parts by volume, per 100 parts by volume of the insulating particles. Within this range, the mechanical strength of the spacer layer can be easily enhanced, and the bonding strength between the substrate layer and the spacer layer is likely to be enhanced.

The thickener may include, for example, at least one selected from the group consisting of carboxymethyl cellulose and a carboxymethyl cellulose salt (hereinafter, at least one selected from the group consisting of carboxymethyl cellulose and a carboxymethyl cellulose salt is sometimes referred to as "CMC"). When a carboxymethyl cellulose salt is used as the CMC, a sodium salt, a lithium salt, a potassium salt, an ammonium salt, and the like can be used. In particular, desirably, the carboxymethyl cellulose salt includes a sodium salt.

### [Nonaqueous electrolyte]

A nonaqueous electrolyte having lithium ion conductivity contains, for example, a nonaqueous solvent, and lithium ions and anions dissolved in the nonaqueous solvent. The nonaqueous electrolyte may be in the form of liquid or gel. The liquid nonaqueous electrolyte is prepared by dissolving a lithium salt in a nonaqueous solvent. When the lithium salt dissolves in the nonaqueous solvent, lithium ions and anions are produced.

As the lithium salt or anion, a known material used in a nonaqueous electrolyte for lithium secondary batteries can be used. Specifically, BF₄⁻, ClO₄⁻, PF₆⁻, CF₃SO₃⁻, CF₃CO₂⁻, imide anions, an oxalate complex anion, and the like can be used. Examples of the imide anions include N(SO₂CF₃)₂⁻, and N(CₘF₂ₘ₊₁SO₂)ₓ(CₙF₂ₙ₊₁SO₂)_{y}⁻, where m and n are each independently an integer of 0 or 1 or more, x and y are each independently 0, 1, or 2, and satisfy x+y = 2. The oxalate complex anion may contain boron and/or phosphorus. The nonaqueous electrolyte may contain these anions singly or in combination of two or more kinds.

From the viewpoint of suppressing dendritic deposition of lithium metal, the nonaqueous electrolyte preferably contains at least an oxalate complex anion, and in particular, desirably, contains an oxalate complex anion having fluorine. The oxalate complex anion having fluorine react with lithium, which allows lithium metal to easily deposit uniformly in the form of fine particles. Therefore, local deposition of lithium metal can be easily suppressed. The oxalate complex anion having fluorine may be combined with another anion. The other anion may be PF₆⁻ and/or imide anions. Examples of the oxalate complex anion include bis(oxalato)borate anion, difluoro(oxalato)borate anion (BF₂(C₂O₄)⁻), PF₄(C₂O₄)⁻, and PF₂(C₂O₄)₂⁻. It is desirable to use at least difluoro(oxalato)borate anion.

The nonaqueous solvent may be, for example, an ester, an ether, a nitrile, an amide, and halogen substituted derivatives thereof. The nonaqueous electrolyte may include these nonaqueous solvents singly or in combination of two or more kinds. Examples of the halogen substituted derivatives include a fluoride.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The lithium salt concentration in the nonaqueous electrolyte is, for example, 0.5 mol/L or more and 3.5 mol/L or less. The anion concentration in the nonaqueous electrolyte may be set to 0.5 mol/L or more and 3.5 mol/L or less. The oxalate complex anion concentration in the nonaqueous electrolyte may be set to 0.05 mol/L or more and 1 mol/L or less.

In the following, an embodiment of the nonaqueous electrolyte secondary battery according to the present disclosure will be further described with reference to the drawings. In each drawing, the shape and feature of each component do not necessarily reflect the actual dimensions, and are not necessarily drawn at the same scale. The same components are denoted by the same reference numerals throughout the drawings.

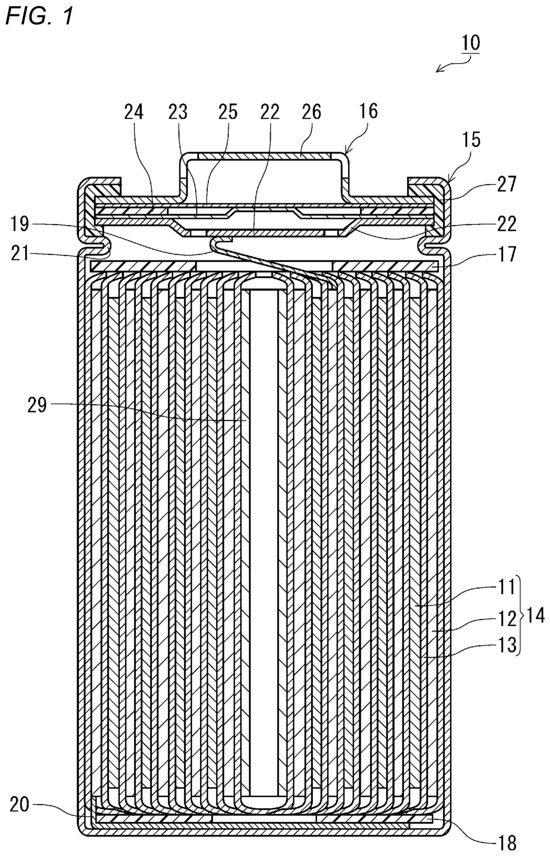

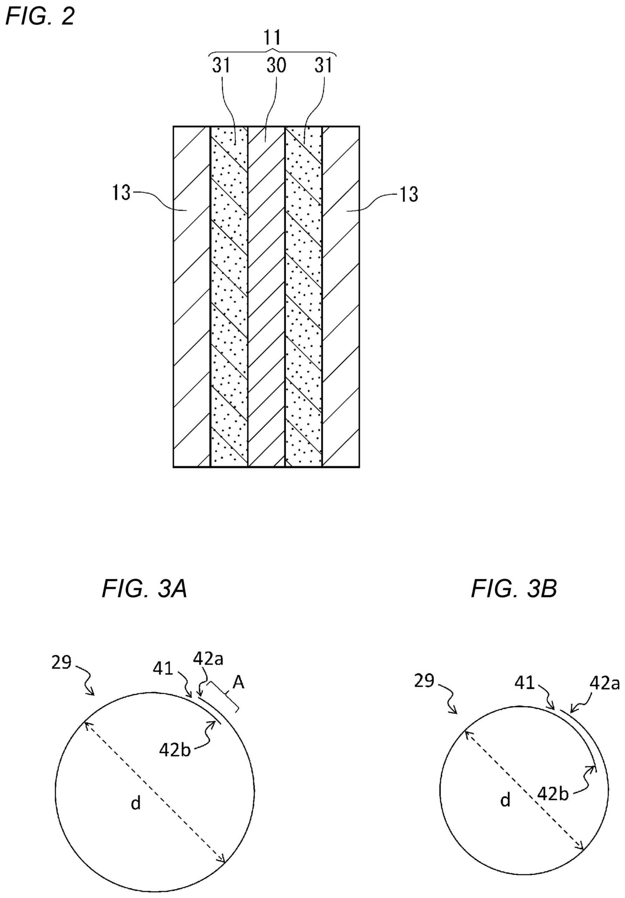

FIG. 1 is a schematic longitudinal sectional view of a secondary battery according to one embodiment of the present disclosure taken along a plane parallel to the winding axis. FIG. 2 is a schematic relevant-part sectional view showing the vicinity of the positive electrode of the lithium secondary battery of FIG. 1.

A battery 10 includes a cylindrical battery case, a wound electrode group 14 housed in the battery case, and a nonaqueous electrolyte (not shown). The battery case includes a battery can 15 having a bottomed cylindrical shape, and a sealing body 16 sealing an opening of the battery can 15. The battery can 15 has, near the opening, an annular step portion 21 formed by partially pressing the sidewall of the battery can from outside. The sealing body 16 is supported on the opening-side surface of the step portion 21. A gasket 27 is disposed between the battery can 15 and the sealing body 16, ensuring the sealing performance of the battery can. Inside the battery can 15, electrically insulating plates 17 and 18 are disposed respectively at both ends in the winding axis direction of the electrode group 14.

The sealing body 16 includes a filter 22, a lower valve body 23, an electrically insulating member 24, an upper valve body 25, and a cap 26. The cap 26 is disposed outside the battery can 15, and the filter 22 is disposed inside the battery can 15. The lower valve body 23 and the upper valve body 25 are connected to each other at their respective centers, and the insulating member 24 is placed between their respective peripheral portions. The filter 22 and the lower valve body 23 are connected to each other at their respective peripheral portions. The upper valve body 25 and the cap 26 are connected to each other at their respective peripheral portions. The lower valve body 23 is provided with an air vent hole. When the internal pressure of the battery can rises due to abnormal heat generation or other causes, the upper valve body 25 bulges toward the cap 26, to be spaced apart from the lower valve body 23. This breaks the electrical connection between the lower valve body 23 and the upper valve body 25. When the internal pressure further rises, the upper valve body 25 ruptures to let gas escape through an opening provided in the cap 26.

The electrode group 14 includes a positive electrode 11, a negative electrode 12, and a separator 13. The positive electrode 11, the negative electrode 12, and the separator 13 interposed therebetween are all in a long-sheet shape (or a belt-like shape) and are wound together such that the width direction of each of them is parallel to the winding axis.

The positive electrode 11 includes a positive electrode support 30 and a positive electrode mixture layer 31. The positive electrode 11 is electrically connected, via a positive electrode lead 19, to the cap 26 serving as a positive electrode terminal. One end of the positive electrode lead 19 is connected, for example, near the center of the positive electrode 11 in the longitudinal direction. The other end of the positive electrode lead 19 extending from the positive electrode 11 passes through a through-hole formed in the insulating plate 17, and is welded to the filter 22 on its inside surface.

The negative electrode 12 is electrically connected, via a negative electrode lead 20 to the battery can 15 serving as a negative electrode terminal. One end of the negative electrode lead 20 is connected, for example, to an end portion of the negative electrode 12 in the longitudinal direction, and the other end is welded to the battery can 15 on its inner bottom surface.

A core member 29 having a cylindrical tubular shape may be disposed in the hollow of the electrode group 14.

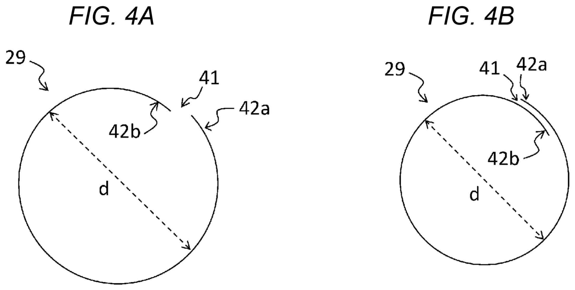

Here, cross sections of examples of the core member disposed in the hollow of the electrode group of the lithium secondary battery are schematically shown in FIGS. 3A and 3B and FIGS. 4A and 4B. In FIGS. 3A and 3B and FIGS. 4A and 4B, only the core member is shown, and the component members (electrode group, etc.) other than the core member are not shown. The core member, although having a certain thickness in the radial direction, is shown linearly for the sake of convenience. FIGS. 3A and 4A show the core member of the lithium secondary battery during discharging (including before the first charging) in the initial stage, and FIGS. 3B and 4B show the core member of the lithium secondary battery during discharging after charge-discharge cycles. The symbol d in FIGS. 3A and 3B and FIGS. 4A and 4B indicates the maximum outer diameter of the core member.

The core member 29 having a hollow tubular shape in FIGS. 3A and 4A has a circular cross-sectional outer shape and is disposed in the hollow of an electrode group (not shown) whose cross-sectional outer shape is also circular. The maximum outer diameter d of the core member 29 in FIGS. 3A and 4A is the diameter of a circle which is the cross-sectional outer shape of the core member.

The core members 29 in FIGS. 3A and 4A each have a slit 41 extending in the axial direction, and both end portions 42a and 42b in the circumferential direction that regulate the slit 41 are misaligned without abutting each other.

In FIG. 3A, the core member 29 has an area A where the both end portions 42a and 42b face each other in the radial direction. In FIG. 3A, the both end portions 42a and 42b facing each other are spaced apart from each other in the radial direction, but may be in contact with each other to the extent that they can be displaced in the circumferential direction during charging and discharging. In FIG. 4A, the both end portions 42a and 42b are spaced apart from each other in the circumferential direction of the core member 29.

When the surface pressure of the electrode group increases after charge-discharge cycles, the core member 29 is strongly pushed from its outer circumferential side by the electrode group, and at least one of the both end portions 42a and 42b is displaced in the circumferential direction, and the core member 29 shrinks in the radial direction as shown in FIGS. 3B and 4B (the maximum outer diameter d becomes smaller). During shrinking of the core members in FIGS. 3B and 4B, the both end portions 42a and 42 facing each other may be in contact with each other.

In FIG. 4A, the both end portions 42a and 42b spaced apart from each other in the circumferential direction of the core member 29 may not necessarily be misaligned. It may be configured such that the both end portions 42a and 42b come in abutment against each other during shrinking. However, in this case, the degree of shrinking is smaller than that of the core member in FIG. 4A.

Although the illustrated example is of a cylindrical lithium secondary battery including a wound electrode group, the shape or the like of the lithium secondary battery is not limited thereto, which may be prismatic and can be selected according to its use etc. from various shapes. In addition, known configurations other than those described above can be used without particular limitations.

### <<Supplementary notes>>

The above description of embodiments discloses the following techniques.

### (Technique 1)

A lithium secondary battery, comprising:
a positive electrode, a negative electrode, a separator disposed between the positive electrode and the negative electrode, and a nonaqueous electrolyte having lithium ion conductivity, wherein
at the negative electrode, lithium metal deposits during charging, and the lithium metal dissolves during discharging,
the positive electrode includes a first positive electrode active material having a compressive strength of 400 MPa or more, and
a thickness X (µm) of lithium metal deposited on the negative electrode during charging and a distance Y (µm) between the positive electrode and the negative electrode during discharging satisfy a relationship of 0.5X + 15 ≤ Y ≤ 4X + 20.

### (Technique 2)

The lithium secondary battery according to technique 1, wherein the first positive electrode active material comprises non-aggregated particles.

### (Technique 3)

The lithium secondary battery according to technique 1 or 2, wherein an average particle diameter of the first positive electrode active material is 1.2 µm or more.

### (Technique 4)

The lithium secondary battery according to any one of techniques 1 to 3, wherein a mixture density of the positive electrode is 3.55 g/cm³ or less.

### (Technique 5)

The lithium secondary battery according to any one of techniques 1 to 4, wherein
the positive electrode includes a positive electrode support that supports the first positive electrode active material, and
the positive electrode support includes a resin film.

### (Technique 6)

The lithium secondary battery according to any one of techniques 1 to 5, wherein
the negative electrode includes a negative electrode support that supports the lithium metal deposited during charging, and
the negative electrode support includes a stainless steel foil, an oxygen-free copper foil, or a resin film.

### (Technique 7)

The lithium secondary battery according to any one of techniques 1 to 6, wherein a ratio of a tensile strength in a length direction to a tensile strength in a width direction of a substrate layer of the separator having a long-length shape or a belt-like shape is 4.5 or more.

### (Technique 8)

The lithium secondary battery according to any one of techniques 1 to 7, wherein a substrate layer of the separator includes a porous sheet, and a composite material layer disposed on a surface of the porous sheet and containing inorganic particles.

### (Technique 9)

The lithium secondary battery according to any one of techniques 1 to 8, wherein
the positive electrode and the negative electrode are wound with the separator interposed between the positive electrode and the negative electrode, forming a wound electrode group, and
a core member is disposed in a hollow of the electrode group.

### (Technique 10)

The lithium secondary battery according to technique 9, wherein
the core member has a hollow tubular shape, and has a slit extending in an axial direction, and
both end portions in a circumferential direction that regulate the slit are misaligned without abutting each other.

### [Examples]

The lithium secondary battery according to the present disclosure will be specifically described below with reference to Examples and Comparative Examples. It is to be noted, however, that the present disclosure is not limited to the following Examples.

### <<Secondary batteries A1 to A14 and B1 to B4>>

### (Synthesis of positive electrode active material)

A composite hydroxide containing Ni, Co, and Mn (or Al) obtained by a coprecipitation method was mixed with LiOH in a molar ratio of Li to the total of Ni, Co, and Mn (or Al) of 1.1:1.0, with Ishikawa's grinding mortar. The mixture was then fired in an oxygen atmosphere for 50 hours, to obtain a lithium-containing composite oxide having a layered rock-salt type crystal structure containing Li, Ni, Co, and Mn (or Al), as a positive electrode active material. At this time, the firing temperature was adjusted as appropriate, to set the compressive strength of the positive electrode active material as shown in Table 1. Also, the fired product was crushed and classified as appropriate, to set the average particle diameter of the positive electrode active material as shown in Table 1. The compressive strength and the average particle diameter were determined by the already-described methods. Hereinafter, the lithium-containing composite oxide having a layered rock-salt type crystal structure containing Li, Ni, Co, and Mn is sometimes referred to as "NCM." The lithium-containing composite oxide having a layered rock-salt type crystal structure containing Li, Ni, Co, and Al is sometimes referred to as "NCA."

The positive electrode active materials having a compressive strength of 400 MPa or more included non-aggregated particles. The positive electrode active materials having a compressive strength of 250 MPa or less included aggregated particles. In the positive electrode active material having a compressive strength of 300 MPa, non-aggregated particles and aggregated particles were mixed.

### (Production of positive electrode)

To 95 parts by mass of the positive electrode active material, 2.5 parts by mass of acetylene black and 2.5 parts by mass of polyvinylidene fluoride were added, and an appropriate amount of N-methyl-2-pyrrolidone was further added, which were stirred together, to prepare a positive electrode mixture slurry.

The positive electrode mixture slurry was applied onto both surfaces of a positive electrode support of a belt-like shape, and dried, and the applied films were rolled, to obtain a laminate in which a positive electrode mixture layer was formed on each of both surfaces of the positive electrode support. By rolling, the mixture density of the positive electrode (density of the positive electrode mixture layer) was set to the value as shown in Table 1. The laminate was cut in a predetermined electrode size, to obtain a positive electrode having a belt-like shape. A positive electrode lead made of Al was attached at a predetermined position of the positive electrode.

The positive electrode support used here was an aluminum foil or a resin film with a foundation metal layer. For the resin film with a foundation metal layer, a polyethylene terephthalate (PET) film provided with foundation metal layers of aluminum formed on its both surfaces was used. In Table 1, Al/PET represents the PET film provided with foundation metal layers of Al.

### (Production of negative electrode)

A negative electrode support having a belt-like shape was prepared. In a dry atmosphere with a dew point of minus 30 degrees or less, a lithium metal foil (thickness 30 µm) was pressure-bonded to each of both surfaces of the negative electrode support, to provide lithium metal layers (foundation layers) thereon. In this way, a negative electrode 12 was prepared. A negative electrode lead 20 made of Ni was attached at a predetermined position of the negative electrode 12.

The thickness X1 (µm) during charging and the thickness X2 (µm) during discharging of the lithium metal layer were set to the values as shown in Table 1. The thickness X (µm) of lithium metal deposited on the negative electrode during charging was obtained by subtracting X2 from X1.

The negative electrode support used here was an oxygen-free copper foil, a stainless steel foil, or a resin film with a foundation metal layer. For the oxygen-free copper foil, a foil of alloy number C1020 specified in JIS H 3100 was used. For the stainless steel, an austenitic stainless steel foil (SUS316L foil) was used. For the resin film with a foundation metal layer, a polyethylene terephthalate (PET) film provided with foundation metal layers of copper formed on both surfaces thereof was used. The thickness of the negative electrode support was set to 10 µm. The thickness of the foundation metal layer per side was set to about 1/10 of the thickness of the PET film. In Table 1, Cu/PET represents the PET film provided with foundation metal layers of Cu.

### (Preparation of separator)

A substrate layer of a separator having a belt-like shape was prepared. The thickness Y (µm) of the substrate layer of the separator was set to the value as shown in Table 1. The ratio of (the tensile strength in the length direction / the tensile strength in the width direction) of the substrate layer of the separator having a belt-like shape, i.e., the (MD/TD) tensile strength ratio, was set to the value as shown in Table 1.

In A1 to A10, A12, and B1 to B4, for the substrate layer of the separator, a single-layer microporous thin film made of polypropylene (PP) was used. In A11, for the substrate layer of the separator, a single-layer microporous thin film made of polyethylene (PE) was used. In A13, for the substrate layer of the separator, one including a single-layer microporous thin film made of polypropylene (PP) and a composite material layer (containing alumina particles) formed on one surface of the microporous thin film was used. The thickness of the composite material layer was set to 20% of the overall thickness Y of the substrate layer of the separator.

### (Preparation of nonaqueous electrolyte)

In a mixed solvent of 1,2-dimethoxyethane and 1,1,2,2-tetrafluoroethyl-2,2,2-trifluoroethyl ether, LiPF₆ and LiBF₂(C₂O₄) were respectively dissolved, to prepare a nonaqueous electrolyte. The concentration of LiPF₆ in the nonaqueous electrolyte was set to 1 mol/L. The concentration of LiBF₂(C₂O₄) in the nonaqueous electrolyte was set to 0.1 mol/L.

### (Assembling of battery)

In an inert gas atmosphere, the positive and negative electrodes were spirally wound, with the separator interposed therebetween, to prepare an electrode group. The electrode group was formed by winding of the positive and negative electrodes and the separator around a cylindrical winding core. Thereafter, the winding core was removed, to obtain a hollow tubular electrode group. As necessary, the positive and negative electrodes and the separator were wound around a hollow tubular core member made of stainless steel, with the end of the separator fixed with a tape to the core member, to obtain an electrode group in which the core member was disposed in the hollow. For the core member, a core member with a shrinkable structure as shown in FIG. 3A was used. The electrode group was housed in a bag-shaped outer body formed of a laminate sheet including an Al layer, and after the nonaqueous electrolyte was injected thereinto, the outer body was sealed. A secondary battery (test cell) was thus fabricated.

### [Evaluation: Capacity retention rate]

The obtained batteries were each subjected to a charge-discharge cycle test in a 25 °C environment. Charging and discharge were performed under the following conditions. The battery was allowed to rest for 20 minutes between charging and discharging.

### (Charging)

A constant-current charging was performed at a current of 10 mA/cm² until the voltage reached 4.1 V, and then, a constant-voltage charging was performed at a voltage of 4.1 V until the current value reached 1 mA/cm².

### (Discharging)

A constant-current discharging was performed at a current of 10 mA/cm² until the voltage reached 3.0 V.

One hundred cycles of charging and discharging were performed, to measure a discharge capacity C1 at the 1st cycle and a discharge capacity C2 at the 100th cycle. The ratio (percentage) of C2 to C1 was calculated as a capacity retention rate (%).

The evaluation results are shown in Table 1. Table 1 also shows the energy density of each battery. The energy density was varied depending on the thickness Y of the separator and the thickness X of the Li metal deposited during charging. The energy density and the capacity retention rate in Table 1 are each expressed as a relative value, with the energy density and the capacity retention rate of the battery A1 each taken as 100.

**[Table 1]**

| second -ary battery | positive electrode active material | | | positive electrode mixture layer density | positive electrode support | Li metal thickness supported on negative electrode support | | thickness X of Li metal deposited on negative electrode during charging (X1-X2) | negative electrode support | separator | | | | core member | energy density | capacity retention rate |
|---|---|---|---|---|---|---|---|---|---|---|---|---|---|---|---|---|
| | compressive strength (MPa) | ave. particle diameter (µm) | composition | | | during charging X1 | during discharging X2 | | | thickness Y | mate -rial | composite material layer | tensile strength ratio | | (relative value) | (relative value) |
| | | | | (g/cm³) | | (µm) | (µm) | (µm) | | (µm) | | | (MD/TD) | | | |
| A1 | 600 | 1 | NCM | 3.75 | Al foil | 50 | 25 | 25 | electrolytic Cu foil | 50 | PP | w/o | 3 | w/o | 100 | 100 |
| A2 | 600 | 1 | NCM | 3.75 | Al foil | 50 | 25 | 25 | electrolytic Cu foil | 80 | PP | w/o | 3 | w/o | 95 | 102 |
| A3 | 600 | 2 | NCM | 3.75 | Al foil | 50 | 25 | 25 | electrolytic Cu foil | 50 | PP | w/o | 3 | w/o | 100 | 102 |
| A4 | 600 | 2 | NCM | 3.40 | Al foil | 50 | 25 | 25 | electrolytic Cu foil | 50 | PP | w/o | 3 | w/o | 100 | 106 |
| A5 | 600 | 2 | NCM | 3.40 | Al/PET | 50 | 25 | 25 | electrolytic Cu foil | 50 | PP | w/o | 3 | w/o | 100 | 107 |
| A6 | 850 | 2 | NCM | 3.40 | Al/PET | 50 | 25 | 25 | SUS316L foil | 50 | PP | w/o | 3 | w/o | 100 | 110 |
| A7 | 850 | 2 | NCM | 3.40 | Al/PET | 50 | 25 | 25 | Oxygen-free Cu foil | 50 | PP | w/o | 3 | w/o | 100 | 109 |
| A8 | 850 | 2 | NCM | 3.40 | Al/PET | 50 | 25 | 25 | Cu/PET | 50 | PP | w/o | 3 | w/o | 100 | 109 |
| A9 | 850 | 3 | NCM | 3.40 | Al/PET | 50 | 25 | 25 | SUS316L foil | 50 | PP | w/o | 5 | w/o | 100 | 115 |
| A10 | 850 | 3 | NCM | 3.40 | Al/PET | 50 | 25 | 25 | SUS316L foil | 50 | PP | w/o | 6 | w/ | 100 | 116 |
| A11 | 850 | 3 | NCM | 3.40 | Al/PET | 50 | 25 | 25 | SUS316L foil | 50 | PE | w/o | 6 | w/ | 100 | 114 |
| A12 | 850 | 3 | NCA | 3.40 | Al/PET | 50 | 25 | 25 | SUS316L foil | 50 | PP | w/o | 6 | w/ | 100 | 114 |
| A13 | 850 | 3 | NCM | 3.40 | Al/PET | 50 | 25 | 25 | SUS316L foil | 50 | PP | w/ | 6 | w/ | 100 | 117 |
| A14 | 850 | 3 | NCM | 3.40 | Al/PET | 30 | 10 | 20 | SUS316L foil | 40 | PP | w/o | 6 | w/ | 102 | 116 |
| B1 | 200 | 2 | NCM | 3.75 | Al foil | 50 | 25 | 25 | SUS316L foil | 50 | PP | w/o | 3 | w/o | 100 | 80 |
| B2 | 850 | 2 | NCM | 3.75 | Al foil | 50 | 25 | 25 | SUS316L foil | 25 | PP | w/o | 5 | w/o | 105 | 90 |
| B3 | 300 | 10 | NCM | 3.75 | Al foil | 50 | 25 | 25 | SUS316L foil | 80 | PP | w/o | 3 | w/o | 95 | 82 |
| B4 | 250 | 10 | NCM | 3.40 | Al foil | 50 | 25 | 25 | SUS316L foil | 40 | PP | w/o | 5 | w/ | 102 | 83 |

In the batteries A1 to A14, high energy density and high capacity-retention rate were both achieved. In the batteries B1 to B4, the capacity retention rate was decreased.

In the battery B2, although the compressive strength of the positive electrode active material was 400 MPa or more, the thickness Y of the separator was as small as less (0.5X+15). Therefore, when the expanded negative electrode pushed the positive electrode particle, cracks of the particles of the positive electrode active material occurred, forming new exposed surfaces, which came in contact with the nonaqueous electrolyte to facilitate side reactions, resulting in deterioration in cycle characteristics.

In the batteries B1, B3, and B4, since the compressive strength of the positive electrode active material was as small as less than 400 MPa, even though the thickness Y of the separator was increased to (0.5X+15) or more, cracks of the particles of the positive electrode active material occurred, forming new exposed surfaces, which came in contact with the nonaqueous electrolyte to facilitate side reactions, resulting in deterioration in cycle characteristics.

### [Industrial Applicability]

The lithium secondary battery of the present disclosure is applicable to electronic equipment, such as cellular phones, smart phones, and tablet terminals, electric cars, hybrid cars, plug-in hybrid cars, storage batteries for home appliances, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: lithium secondary battery, 11: positive electrode, 12: negative electrode, 13: separator, 14: electrode group, 15: battery can, 16: sealing body, 17, 18: insulating plate, 19: positive electrode lead, 20: negative electrode lead, 21: step portion, 22: filter, 23: lower valve body, 24: insulating member, 25: upper valve body, 26: cap, 27: gasket, 29: core member, 30: positive electrode support, 31: positive electrode mixture layer, 41: slit, 42a, 42b: circumferential end portions

## Claims

1. A lithium secondary battery, comprising:
a positive electrode, a negative electrode, a separator disposed between the positive electrode and the negative electrode, and a nonaqueous electrolyte having lithium ion conductivity, wherein
at the negative electrode, lithium metal deposits during charging, and the lithium metal dissolves during discharging,
the positive electrode includes a first positive electrode active material having a compressive strength of 400 MPa or more, and
a thickness X (µm) of lithium metal deposited on the negative electrode during charging and a distance Y (µm) between the positive electrode and the negative electrode during discharging satisfy a relationship of 0.5X + 15 ≤ Y ≤ 4X + 20.

2. The lithium secondary battery according to claim 1, wherein the first positive electrode active material comprises non-aggregated particles.

3. The lithium secondary battery according to claim 1, wherein an average particle diameter of the first positive electrode active material is 1.2 µm or more.

4. The lithium secondary battery according to claim 1, wherein a mixture density of the positive electrode is 3.55 g/cm³ or less.

5. The lithium secondary battery according to claim 1, wherein
the positive electrode includes a positive electrode support that supports the first positive electrode active material, and
the positive electrode support includes a resin film.

6. The lithium secondary battery according to claim 1, wherein
the negative electrode includes a negative electrode support that supports the lithium metal deposited during charging, and
the negative electrode support includes a stainless steel foil, an oxygen-free copper foil, or a resin film.

7. The lithium secondary battery according to claim 1, wherein a ratio of a tensile strength in a length direction to a tensile strength in a width direction of a substrate layer of the separator having a long-length shape or a belt-like shape is 4.5 or more.

8. The lithium secondary battery according to claim 1, wherein a substrate layer of the separator includes a porous sheet, and a composite material layer disposed on a surface of the porous sheet and containing inorganic particles.

9. The lithium secondary battery according to claim 1, wherein
the positive electrode and the negative electrode are wound with the separator interposed between the positive electrode and the negative electrode, forming a wound electrode group, and
a core member is disposed in a hollow of the electrode group.

10. The lithium secondary battery according to claim 9, wherein
the core member has a hollow tubular shape, and has a slit extending in an axial direction, and
both end portions in a circumferential direction that regulate the slit are misaligned without abutting each other.
